# EUROPÄISCHE PATENTSCHRIFT

(11) **EP 2 863 185 B1**
(45) Veröffentlichungstag und Bekanntmachung des Hinweises auf die Patenterteilung: **16.08.2017**
(21) Anmeldenummer: 13188672.3
(22) Anmeldetag: 15.10.2013
(51) Int. Cl.: G01D 5/347

(54) **Messwertgeber zum Erhalt einer Lageinformation**
Measurement encoder for receiving position information
Capteur de valeurs de mesure pour obtenir une information de position

(43) Veröffentlichungstag der Anmeldung: 22.04.2015
(73) Patentinhaber: Siemens Aktiengesellschaft, 80333 München (DE)
(72) Erfinder: Finkler, Roland, 91058 Erlangen (DE); Wetzel, Ulrich, 91058 Erlangen (DE); Zettner, Jürgen, 90587 Veitsbronn (DE)

(56) Entgegenhaltungen:
- EP-A1- 1 382 941
- EP-A2- 1 821 075
- DE-A1- 19 915 105
- GB-A- 2 056 660
- US-A- 3 351 768
- US-A- 5 223 708
- US-A- 5 251 012

## Beschreibung

Die Erfindung betrifft einen optischen Messwertgeber (optischen Encoder) zum Erhalt einer Lageinformation. Messwertgeber sind an sich bekannt. Exemplarisch kann auf sogenannte Inkrementalgeber verwiesen werden.

Der hier zu beschreibende optische Messwertgeber basiert auf einer optischen Abtastung der jeweiligen Maßverkörperung. Dies ist, zum Beispiel bei Inkrementalgebern oder dergleichen, ebenfalls bekannt.

Hochauflösende optische Messwertgeber für die Generierung von genauen Lageinformationen sind mit speziell beschichteten Trägersubstraten (vorrangig Glas) als Maßverkörperung ausgestattet. Bei refraktiven Messwertgebern handelt es sich bei der Maßverkörperung um vergleichsweise einfache Hell-Dunkel-Strukturen (Strichmuster), die mit einer entsprechenden Optikeinheit (Sende-/Empfangseinheit) abgetastet werden - sowohl im Durchlicht- wie auch im Auflichtverfahren (transmissiv bzw. reflexiv). Solche Strukturen werden zum Beispiel in einem aufwendigen lithografischen Prozess hergestellt. Maßverkörperungen mit Hologrammen als Informationsträger können mit einfacheren Abformprozessen, zum Beispiel dem sogenannten UV-Casting, hergestellt werden. Für den Empfang der Lichtsignale werden üblicherweise optische Sensoren zum Beispiel in Form von Photodioden, Photodiodenarrays, CCD- oder CMOS-Elementen verwendet. Oftmals werden bestimmte optische Fokussierelemente (z.B. Linsen- oder Linsensysteme) vor solchen Sensoren angebracht, um das Licht optimal auf die Sensorflächen zu fokussieren.

Der Einsatz von holografischen Maßverkörperungen hat den Vorteil, dass sich das bei der Abtastung der Maßverkörperung resultierende optische Bild nach bestimmten mechanischen Vorgaben einstellen lässt (z.B. diskrete, binäre Darstellung). Somit kann mechanischen Toleranzen entgegengewirkt und ein hinsichtlich der Auswertegenauigkeit robuster Aufbau des Messwertgebers realisiert werden. Dabei ist die Toleranz des mechanischen Systems besonders von den Sende- und Empfangselementen abhängig.

Wenn eine große Empfangsfläche zur Verfügung steht, fällt ein aufgrund mechanischer Ungenauigkeiten resultierender Versatz des optischen Signals weniger ins Gewicht als bei einer kleinen Empfangsfläche. Allerdings lässt sich die Empfangsfläche der Sende-/Empfangseinheit nicht ohne weiteres beliebig vergrößern, denn auch unbeleuchtete Bereiche tragen zu einem jeweils resultierenden Gesamtsignal bei. Dann fließt in das Gesamtsignal auch ein die Auswertung erschwerender Rauschanteil ein. Je größer also die Empfangsfläche und je kleiner die jeweils beleuchtete Fläche im Verhältnis zur unbeleuchteten Fläche ist, desto größer wird der Rauschanteil und desto ungenauer lässt sich das aufgrund der Abtastung der Maßverkörperung resultierende optische Bild auswerten.

Aus der US 5 223 708 A ist ein optischer Positionssensor bekannt, der ein Signal bezüglich der Position eines Elements in Bezug auf einen Überwachungspunkt erzeugt. Der Positionssensor umfasst eine Lichtquelle, die ein Testlicht und ein Referenzlicht mit unterschiedlichen Wellenlängen bereitstellt.

Die US 3 351 768 A betrifft eine Vorrichtung zur Bestimmung und Steuerung der Lageänderung eines Bezugssystems.

Aus der EP 1 821 075 A2 ist einem photoelektrischer Geber mit einem Detektor bekannt wobei die Messung eines breiten Erfassungsbereichs unter Verwendung eines kleinformatigen und einfachen optisches Systems ermöglicht wird.

Eine Aufgabe der vorliegenden Erfindung besteht entsprechend darin, eine verbesserte Ausführungsform eines Messwertgebers anzugeben, speziell einen Messwertgeber, der sich durch eine erhöhte Robustheit gegenüber mechanischen Toleranzen auszeichnet.

Diese Aufgabe wird mit einem Messwertgeber mit den Merkmalen des Anspruchs 1 gelöst. Dazu ist bei einem zum Erhalt einer Lageinformation bestimmten optischen Messwertgeber, der eine Sende-/Empfangseinheit zur Abtastung einer Maßverkörperung umfasst, wobei die Sende-/Empfangseinheit eine Mehrzahl von Sensorelementen umfasst, vorgesehen, dass im Strahlgang zwischen der Maßverkörperung und den Sensorelementen zumindest eine der Anzahl der Sensorelemente entsprechende Anzahl von Lichtleitelementen angeordnet ist, wobei jedes Lichtleitelement die bei der Abtastung der Maßverkörperung reflektierten oder transmittierten Lichtstrahlen auf jeweils ein Sensorelement fokussiert.

Die Erfindung geht von der Erkenntnis aus, dass die Sensorik, also die Gesamtheit der Sensorelemente, flächenmäßig möglichst klein zu halten ist, damit das Rauschen aufgrund unbeleuchteter Bereiche gering bleibt. Mit einer konvexen Linse im Strahlgang zwischen der Maßverkörperung und einer Mehrzahl von Sensorelementen könnte man das bei der Abtastung der Maßverkörperung reflektierte oder transmittierte Licht auf einen kleinen Bereich, nämlich die jeweilige Fläche der Sensorik, konzentrieren. Das Problem des Strahlversatzes ist dadurch aber nicht gelöst, denn von der Linse aufgefangenes Licht, das nicht im richtigen Winkel einstrahlt, geht verloren. Zudem geht mit herkömmlichen Linsen eine Fokussierung auf einen Fokuspunkt in der optischen Achse einher, wohingegen aber bei integrierten optischen Empfangselementen mit einer Mehrzahl von Sensorelementen (Photodiodenarray) nicht alle Sensorelemente auf der optischen Achse der Linse liegen können, so dass die Sensorelemente in Abhängigkeit von ihrer Entfernung von der optischen Achse ein verzerrtes Bild aufnehmen.

Zur Lösung des Problems wird daher hier vorgeschlagen, dass jedem Sensorelement zumindest ein Lichtleitelement zugeordnet ist, dass also im Strahlgang zwischen der Maßverkörperung und den Sensorelementen zumindest eine der Anzahl der Sensorelemente entsprechende Anzahl von Lichtleitelementen angeordnet ist und dass jedes Lichtleitelement die bei der Abtastung der Maßverkörperung reflektierten oder transmittierten Lichtstrahlen auf jeweils ein Sensorelement fokussiert.

Der Vorteil des hier vorgestellten Ansatzes besteht darin, dass mittels eines jedem Sensorelement zugeordneten Lichtleitelements eine exklusive und optimale Fokussierung der bei der Abtastung der Maßverkörperung reflektierten oder transmittierten Lichtstrahlen auf jeweils genau ein Sensorelement möglich ist. Die Fläche jedes einzelnen Sensorelements der Sende-/Empfangseinheit kann damit so klein wie möglich gehalten werden, so dass störendes Rauschen aufgrund unbeleuchteter Flächen minimiert wird. Die Gesamtfläche der Lichtleitelemente kann demgegenüber so groß sein, wie dies zur Kompensation eventueller mechanischer Toleranzen innerhalb des Messwertgebers erforderlich ist. Üblicherweise ist daher die Gesamtfläche der Lichtleitelemente größer, zum Beispiel zweimal so groß, viermal so groß, usw., wie die Gesamtfläche der Sensorelemente. Die bei der Abtastung der Maßverkörperung reflektierten oder transmittierten Lichtstrahlen werden von der Gesamtfläche der Lichtleitelemente aufgefangen und durch jedes Lichtleitelement zu dem diesem zugeordneten Sensorelement weitergeleitet.

Vorteilhafte Ausgestaltungen des Messwertgebers sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Zum Auffangen der bei der Abtastung der Maßverkörperung resultierenden reflektierten oder transmittierten Lichtstrahlen kommen unterschiedliche Lichtleitelemente in Betracht. Eine Möglichkeit besteht darin, als Lichtleitelemente jeweils konvexe Linsen zu verwenden, die insgesamt zu einem Linsenarray zusammengefasst sind, so dass jeweils zumindest eine Linse oder genau eine Linse in diesem Linsenarray einem Sensorelement der Sende-/Empfangseinheit zugeordnet ist und die aufgefangenen Strahlen auf die Fläche des jeweiligen Sensorelements fokussiert.

Andere in dieser Hinsicht geeignete Lichtleitelemente sind zum Beispiel Kugellinsen, Lichtleitelemente nach Art eines sogenannten Sollektors (im Folgenden als Sollektorlinsen bezeichnet) oder diffraktive Elemente, die sämtlich ebenfalls matrixartig (Array) zusammengefasst werden können, so dass sich eine ausreichende Gesamtfläche mit einer zumindest der Anzahl der Sensorelemente entsprechenden Anzahl von Lichtleitelementen ergibt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen:
- FIG 1: einen optischen Messwertgeber mit Lichtleitelementen in einem Strahlgang zwischen einer zum Erhalt einer Lageinformation abgetasteten Maßverkörperung und einer Mehrzahl von Sensorelementen zur Auswertung eines bei der Abtastung der Maßverkörperung resultierenden Bildes in einer geschnittenen Seitenansicht,
- FIG 2: den optischen Messwertgeber aus FIG 1 in einer geschnittenen Draufsicht,
- FIG 3: einen vergrößerten Ausschnitt aus der Darstellung in FIG 1,
- FIG 4: eine weitere Ausführungsform eines optischen Messwertgebers in einer geschnittenen Seitenansicht,
- FIG 5: den optischen Messwertgeber aus FIG 4 in einer geschnittenen Draufsicht,
- FIG 6: einen vergrößerten Ausschnitt aus der Darstellung in FIG 4 und
- FIG 7: eine spezielle Ausführungsform der in dem Strahlgang von der Maßverkörperung zu den Sensorelementen vorgesehenen Lichtleitelemente.

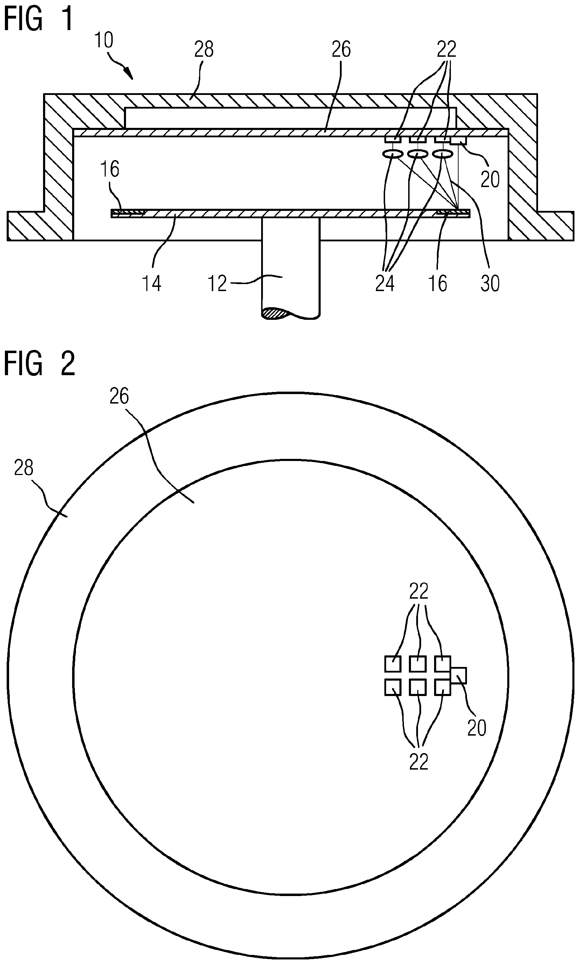

Die Darstellung in FIG 1 zeigt schematisch vereinfacht in einer geschnittenen Seitenansicht eine Ausführungsform eines zum Erhalt einer Lageinformation bestimmten optischen Messwertgebers 10, wie er hier vorgeschlagen wird. Die Lageinformation ist zum Beispiel eine Positions-, Winkel- oder Geschwindigkeitsinformation eines Elektromotors oder dergleichen. Dazu wird bei der dargestellten Ausführungsform mittels einer Welle 12 eine hier als Beispiel für einen Träger allgemeiner Art gezeigte Scheibe 14 in Rotation versetzt. Diese Scheibe umfasst umlaufend eine optisch abtastbare Maßverkörperung 16, zum Beispiel in Form von Hologrammen.

Zur Abtastung der Maßverkörperung 16 umfasst der optische Messwertgeber 10 eine Sende-/Empfangseinheit oder eine Sendeeinheit und eine davon räumlich unabhängige Empfangseinheit. Beide möglichen Varianten werden hier und im Folgenden zusammen kurz und ohne Verzicht auf eine weitergehende Allgemeingültigkeit als Sende-/Empfangseinheit bezeichnet. Die Sende/Empfangseinheit oder eine separate Sendeeinheit umfasst zumindest einen Sender 20, zum Beispiel eine Laserdiode oder dergleichen. Die Sende-/Empfangseinheit oder eine separate Empfangseinheit umfasst eine Mehrzahl von optisch sensitiven Sensorelementen 22.

Der Darstellung in FIG 2 zeigt den Messwertgeber 10 aus FIG 1 in einer geschnittenen Ansicht von oben. Dabei wird deutlich, dass die Sensorelemente 22, hier sechs Sensorelemente 22, in einer zeilen- und spaltenförmigen Struktur, also matrixartig in einem festen Raster angeordnet sind.

Mittels der Sende-/Empfangseinheit, also mittels des zumindest einen Senders 20 und der Sensorelemente 22, erfolgt eine Abtastung der Maßverkörperung 16. Die Abtastung ist dabei - wie in FIG 1 gezeigt - möglich, indem vom Sender 20 abgestrahltes Licht an der Maßverkörperung 16 reflektiert und nach der Reflexion von den Sensorelementen 22 aufgefangen wird. Die Sensorelemente 22 befinden sich dabei in Bezug auf die Scheibe 14 auf derselben Seite wie der Sender 20. Die Abtastung ist genauso möglich (nicht gezeigt), indem vom Sender 20 abgestrahltes Licht an der Maßverkörperung 16 transmittiert und nach der Transmission von den Sensorelementen 22 aufgefangen wird. Die Sensorelemente 22 befinden sich in diesem Falle in Bezug auf die Scheibe 14 auf der dem Sender 20 gegenüberliegenden Seite.

Zur Fokussierung des an der Maßverkörperung 16 reflektierten oder transmittierten Lichts sind Lichtleitelemente 24 vorgesehen. Diese befinden sich im Strahlgang zwischen der Maßverkörperung 16 und den Sensorelementen 22. Die Anzahl der Lichtleitelemente 24 entspricht zumindest der Anzahl der Sensorelemente 22, bei der dargestellten Ausführungsform genau der Anzahl der Sensorelemente 22. Jedem Sensorelement 22 ist also zumindest ein Lichtleitelement 24 oder genau ein Lichtleitelement 24 zugeordnet.

Die Sensorelemente 22, gegebenenfalls die Sensorelemente 22 und der Sender 20, sind zusammen auf einer vom Messwertgeber 10 umfassten Platine 26 angeordnet. Die Platine 26 befindet sich wiederum in einem Gehäuse 28 des Messwertgebers 10. Bei der in FIG 1 dargestellten Ausführungsform nimmt das Gehäuse 28 auch die Scheibe 14 mit der Maßverkörperung 16 auf, so dass sich ein gekapseltes System ergibt, bei dem die optische Abtastung der Maßverkörperung 16 nicht oder kaum durch Staub oder sonstige den Strahlgang vom Sender 20 zu den Sensorelementen 22 beeinträchtigende Partikel gestört wird.

Bei den in FIG 1 dargestellten Lichtleitelementen 24 handelt es sich um konvexe Linsen, die entsprechend der Position der Sensorelemente 22 auf der Platine 26 ebenfalls in einer matrixförmigen Struktur angeordnet sind, so dass jedes Lichtleitelement 24 genau einem Sensorelement 22 zugeordnet ist. Man erkennt anhand der Darstellung in FIG 1, dass eine Gesamtfläche der Lichtleitelemente 24 größer als eine Gesamtfläche der Sensorelemente 22 ist. Damit kann selbst bei mechanischen Ungenauigkeiten bei der Fertigung oder beim Betrieb des Messwertgebers 10, zum Beispiel bei Ungenauigkeiten bei der Ausrichtung der Scheibe 14, einer Exzentrizität der Scheibe 14 oder einem Taumeln der Scheibe 14, davon ausgegangen werden, dass die bei der Abtastung der Maßverkörperung 16 reflektierten oder transmittierten Lichtstrahlen 30 von der Gesamtfläche der Lichtleitelemente 24 aufgefangen und von diesen zu den Sensorelementen 22 weitergeleitet oder auf die Sensorelemente 22 fokussiert werden.

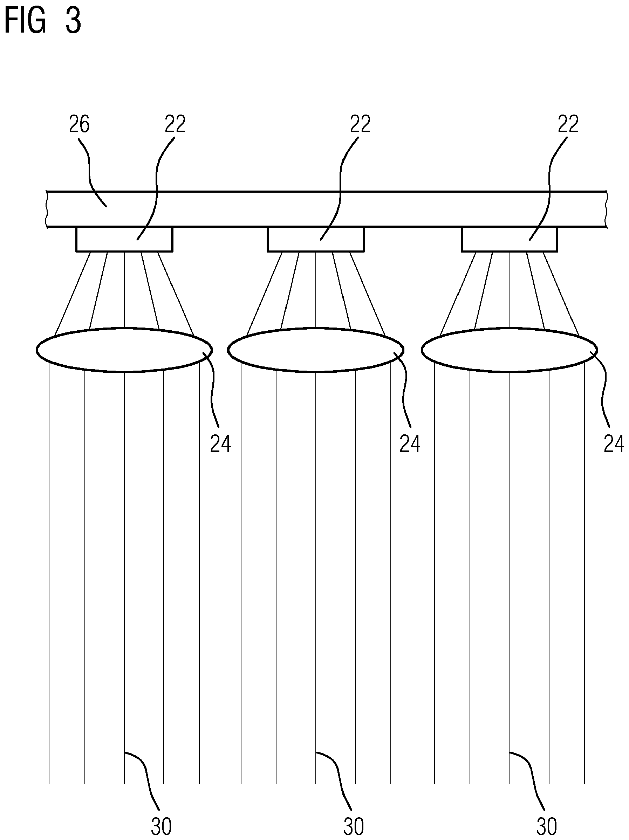

Dazu zeigt die Darstellung in FIG 3 eine vergrößerte Ansicht eines Ausschnitts aus der Darstellung in FIG 1 mit den Sensorelementen 22 und jeweils einem einem Sensorelement 22 zugeordneten Lichtleitelement 24. Man erkennt, dass die bei der Abtastung der Maßverkörperung 16 reflektierten oder transmittierten Lichtstrahlen 30 von der im Vergleich zur Gesamtoberfläche der Sensorelemente 22 größeren Gesamtoberfläche der Lichtleitelemente 24 aufgefangen werden. Dies gewährleistet die angestrebte verbesserte Unempfindlichkeit gegen mechanische Toleranzen bei der Fertigung oder beim Betrieb des Messwertgebers 10. Die von den Lichtleitelementen 24 aufgefangenen Lichtstrahlen 30 werden von jedem Lichtleitelement 24 zu dem diesem zugeordneten Sensorelement 22 weitergeleitet.

Bei den in FIG 1 und FIG 2 gezeigten Sensorelementen 22 handelt es sich zum Beispiel um diskrete Sensorelemente 22, die einzeln auf der Platine 26 des Messwertgebers 10 platziert sind. Die Position der Sensorelemente 22 und deren Abstände untereinander können dann genau auf die Dimension der Lichtleitelemente 24 abgestimmt werden, so dass sich zum Beispiel der Mittelpunkt jedes Sensorelements 22 exakt auf der jeweiligen optischen Achse der als Lichtleitelemente 24 fungierenden konvexen Linsen befindet.

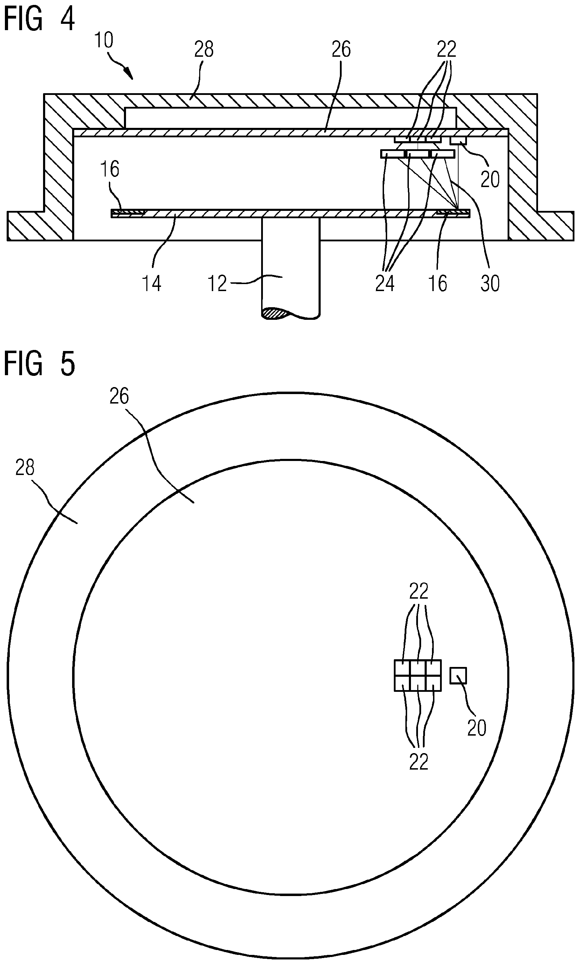

Die Darstellung in FIG 4 zeigt einen Messwertgeber 10 wie in FIG 1. Im Unterschied zu dem Messwertgeber 10 in FIG 1 sind hier als Lichtleitelemente 24 schematisch vereinfacht diffraktiv wirkende Lichtleitelemente 24 gezeigt.

Der Darstellung in FIG 5 zeigt den Messwertgeber 10 aus FIG 4 in einer geschnittenen Ansicht von oben. Dabei wird deutlich - wie bei der Darstellung in Figur 2 -, dass die Sensorelemente 22, hier sechs Sensorelemente 22, erneut in einer zeilen- und spaltenförmigen Struktur, also matrixartig in einem festen Raster angeordnet sind.

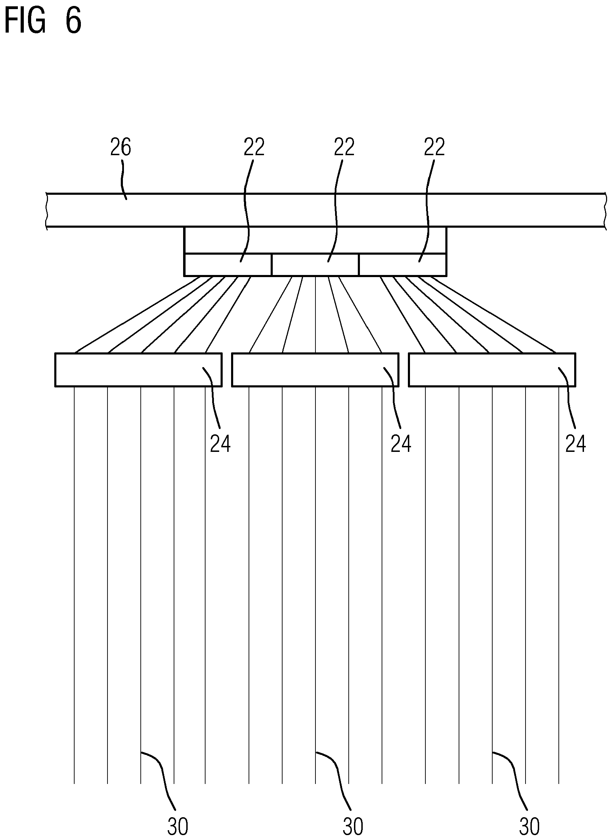

Bei den in FIG 4 und FIG 5 gezeigten Sensorelementen 22 handelt es sich zum Beispiel um integrierte Sensorelemente 22, die in Form eines einzelnen elektronischen Bauteils auf der Platine 26 des Messwertgebers 10 platziert werden. Die Positionen der einzelnen Sensorelemente 22 und deren Abstände untereinander liegen damit fest. Durch diffraktiv wirkende Lichtleitelemente 24 lässt sich zum Beispiel erreichen, dass einzelne Lichtleitelemente 24 eine stärkere Auslenkung der aufgefangenen Lichtstrahlen 30 bewirken als andere Lichtleitelemente 24, wie dies schematisch vereinfacht in der Darstellung in FIG 6 als Ausschnitt aus der Darstellung in FIG 4 gezeigt ist. Auf diese Weise lässt sich gewährleisten, dass erneut die Gesamtfläche der Lichtleitelemente 24 für den Empfang der bei der Abtastung der Maßverkörperung 16 reflektierten oder transmittierten Lichtstrahlen 30 genutzt werden kann und dass die auf der Gesamtoberfläche der Lichtleitelemente 24 aufgefangenen Lichtstrahlen 30 vom jeweiligen Lichtleitelement 24 zu dem diesem zugeordneten Sensorelement 22 weitergeleitet werden.

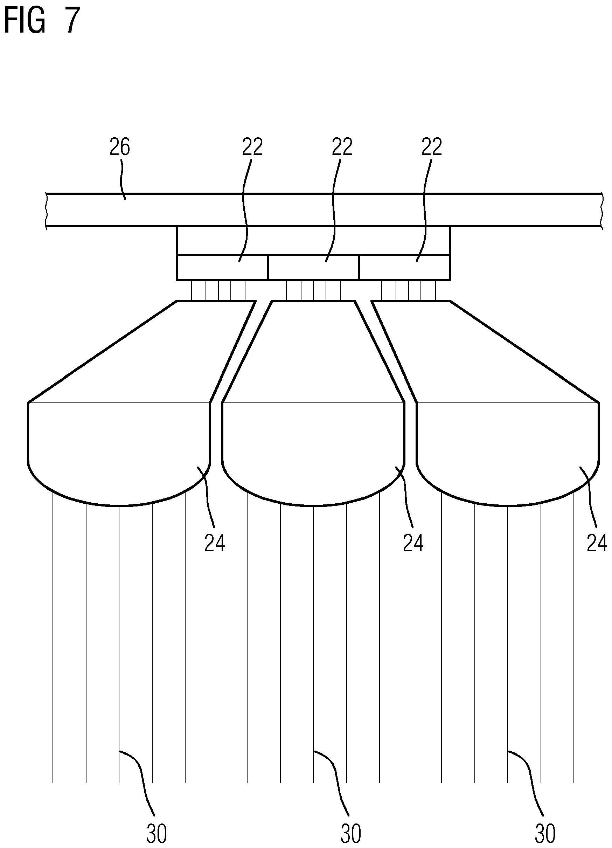

Die Darstellung in FIG 7 zeigt abschließend exemplarisch eine besondere Variante von Lichtleitelementen 24. Diese fungieren auf der Seite der einfallenden Lichtstrahlen 30 wie ein optischer Sammler und weisen hier entsprechend eine konvexe oder kugellinsenförmige Oberfläche auf. Auf der Seite der austretenden Lichtstrahlen 30 weisen diese Lichtleitelemente 24 einen sich verjüngenden Fortsatz auf, der in der Fachterminologie oftmals auch als "pigtail" bezeichnet wird, und der Fortsatz bewirkt speziell die gerichtete Weiterleitung der von der konvexen oder kugellinsenförmigen Oberfläche aufgefangenen Lichtstrahlen 30 zur Oberfläche des dem Lichtleitelement 24 jeweils zugeordneten Sensorelements 22. Solche Lichtleitelemente 24 mit ihrer vergleichsweise komplexen Geometrie werden als optische Sphären bezeichnet.

Die Darstellung in FIG 7 kann auch als Beispiel für eine nochmals weitere Ausführungsform der Lichtleitelemente 24 hergenommen werden. Dann sind jedem Sensorelement 22 eine Mehrzahl von Lichtleitelementen 24 der in FIG 7 dargestellten Art zugeordnet, zum Beispiel vier, neun oder sechzehn derartige Lichtleitelemente 24. Bei einer solchen Zusammenfassung mehrerer derartiger Lichtleitelemente 24 wird jedes Lichtleitelement 24 als Sollektorlinse bezeichnet.

Die Gesamtheit der jeweils verwendeten Lichtleitelemente 24 ist in einem festen Raster angeordnet und insoweit kommt in Betracht, dass die Lichtleitelemente 24 zu einer Einheit mit fixen Abständen der Lichtleitelemente 24 untereinander zusammengefasst sind.

Der hier vorgestellte Messwertgeber 10 mit seinen Ausgestaltungen kommt besonders zur Verwendung im Zusammenhang mit einer Lage und oder Geschwindigkeitsregelung eines Elektromotors in Betracht. Entsprechend ist die Erfindung auch eine Antriebseinheit für einen solchen Elektromotor mit einem Messwertgeber der hier beschriebenen Art.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen:
Angegeben wird ein Messwertgeber 10 zum Erhalt einer Lageinformation, bei dem zur gleichzeitigen Minimierung der Fläche einer durch eine Mehrzahl von Sensorelementen 22 gebildeten Empfangssensorik und zur Erhöhung der Auswertegenauigkeit auch bei mechanischen Toleranzen im Strahlgang zwischen einer jeweils abgetasteten Maßverkörperung 16 und den Sensorelementen 22 zumindest eine der Anzahl der Sensorelemente 22 entsprechende Anzahl von Lichtleitelementen 24 angeordnet ist, so dass jedes Lichtleitelement 24 die bei der Abtastung der Maßverkörperung 16 aufgefangenen Lichtstrahlen 30 in optimaler Weise zum jeweiligen Sensorelement 22 weiterleitet.

## Patentansprüche

1. Optischer Messwertgeber (10) zum Erhalt einer Lageinformation,
- mit einer Sende-/Empfangseinheit zur Abtastung einer Maßverkörperung (16),
- wobei die Sende-/Empfangseinheit eine Mehrzahl von Sensorelementen (22) umfasst,
- wobei im Strahlgang zwischen der Maßverkörperung (16) und den Sensorelementen (22) zumindest eine der Mehrzahl der Sensorelemente (22) entsprechende Mehrzahl von Lichtleitelementen (24) angeordnet ist,
- wobei eine Gesamtfläche der Lichtleitelemente (24) größer als eine Gesamtfläche der Sensorelemente (22) ist, und
- mit einseitig kugellinsenförmigen optischen Sphären als Lichtleitelemente (24), mit auf einer Strahleinfallsseite kugellinsenförmigen optischen Sphären mit sich verjüngenden Fortsätzen auf einer Strahlaustrittsseite als Lichtleitelemente (24).

2. Optischer Messwertgeber (10) nach Anspruch 1, wobei jedem Sensorelement (22) zumindest ein Lichtleitelement (24) zugeordnet ist.

3. Optischer Messwertgeber (10) nach Anspruch 1 oder 2, wobei die Sensorelemente (22) in einem festen Raster angeordnet sind und wobei die Lichtleitelemente (24) zu einer Einheit mit fixen Abständen der Lichtleitelemente (24) untereinander zusammengefasst sind.

4. Optischer Messwertgeber (10) nach einem der Ansprüche 1 bis 3, mit diffraktiv wirkenden optischen Elementen als Lichtleitelementen (24).

5. Antriebseinheit mit einem Messwertgeber (10) nach einem der vorangehenden Ansprüche.

## Claims

1. Optical measurement encoder (10) for receiving position information,
- with a transmit/receive unit for scanning a measuring standard (16),
- wherein the transmit/receive unit comprises a plurality of sensor elements (22),
- wherein at least one plurality of light-guiding elements (24) which corresponds to the plurality of sensor elements (22) is arranged in the beam path between the measuring standard (16) and the sensor elements (22),
- wherein a total area of the light-guiding elements (24) is larger than a total area of the sensor elements (22), and
- with spherical lens-shaped optical spheres as light-guiding elements (24) on one side, with spherical lens-shaped optical spheres with tapering extensions on a beam exit side as light-guiding elements (24) on a beam incidence side.

2. Optical measurement encoder (10) according to claim 1, wherein at least one light-guiding element (24) is assigned to each sensor element (22).

3. Optical measurement encoder (10) according to claim 1 or 2, wherein the sensor elements (22) are arranged in a fixed grid and wherein the light-guiding elements (24) are combined to form a unit with fixed distances between the light-guiding elements (24).

4. Optical measurement encoder (10) according to one of claims 1 to 3, with diffractively functioning optical elements as light-guiding elements (24).

5. Drive unit with a measurement encoder (10) according to one of the preceding claims.

## Revendications

1. Capteur (10) optique de valeurs de mesure pour obtenir une information de position,
- comprenant une unité d'émission/réception pour l'échantillonnage d'une mesure (16) matérialisée,
- dans lequel l'unité d'émission/réception comprend une pluralité d'éléments (22) de capteur,
- dans lequel, dans le trajet du faisceau, entre la mesure (16) matérialisée et les éléments (22) de capteur, est montée au moins une pluralité d'éléments (24) de guidage de la lumière, correspondant à la pluralité des éléments (22) de capteur,
- dans lequel une surface globale des éléments (24) de guidage de la lumière est plus grande qu'une surface globale des éléments (22) de capteur et
- comprenant des sphères optiques en forme de lentilles sphériques d'un côté, comme éléments (24) de guidage de la lumière, comprenant, d'un côté d'incidence du faisceau, des sphères optiques en forme de lentilles sphériques, ayant des prolongements se rétrécissant d'un côté de sortie du faisceau, comme éléments (24) de guidage de la lumière.

2. Capteur (10) optique de valeurs de mesure suivant la revendication 1, dans lequel au moins un élément (24) de guidage de la lumière est associé à chaque élément (22) de capteur.

3. Capteur (10) optique de valeurs de mesure suivant la revendication 1 ou 2, dans lequel les éléments (22) de capteur sont disposés suivant une trame fixe et dans lequel les éléments (24) de guidage de la lumière sont rassemblés en une unité, à des intervalles fixes des éléments (24) de guidage de la lumière entre eux.

4. Capteur (10) optique de valeurs de mesure suivant l'une des revendications 1 à 3, comprenant des éléments optiques de diffraction comme éléments (24) de guidage de la lumière.

5. Unité d'entraînement ayant un capteur (10) de valeur de mesure suivant l'une des revendications précédentes.
